# EUROPEAN PATENT APPLICATION

(11) **EP 4 319 000 A1**
(43) Date of publication of application: **07.02.2024**
(21) Application number: 21932107.2
(22) Date of filing: 24.03.2021
(51) Int. Cl.: H04L 1/18

(54) **HARQ FEEDBACK METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Gunzelmann, Rainer
(86) International application number: PCT/CN2021/082606
(87) International publication number: WO 2022/198479

(57) **Abstract**

Provided in the embodiments of the present disclosure is a hybrid automatic repeat request (HARQ) feedback method, wherein the method is executed by a terminal. The method comprises: according to downlink control information (DCI) of a scheduling medium access control (MAC) control element (CE), determining whether to perform a HARQ feedback operation on a receiving result of the MAC CE.

## Description

### TECHNICAL FIELD

The disclosure relates to the field of wireless communication technologies but is not limited to the field of wireless communication technologies, and in particular, to a method for hybrid automatic repeat request (HARQ) feedback, an apparatus for HARQ feedback, a communication device, and a storage medium.

### BACKGROUND

Non-terrestrial network (NTN) communications, especially satellite communications, have characteristics of wide coverage, strong disaster resistance, large capacity, and the like. The NTN may be used as a supplement to a terrestrial network to provide users with continuity services, to enhance the network reliability, directly provide users at a network edge with broadcast or multicast services, to enhance the network scalability, and operate alone to provide unique services for remote areas, isolated islands, and the like, to make network services ubiquitous. Compared with the terrestrial network, the NTN has characteristics of large transmission delay due to a long distance between two communication parties.

In the related art, a hybrid automatic repeat request (HARQ) mechanism is one of the most important functions in the new radio. Combined with link adaptation, the HARQ may achieve efficient, reliable, and low-latency data transmission in cellular networks. However, in the NTN scenario, the introduction of the HARQ mechanism may increase the network transmission delay and affect the NTN network performance.

### SUMMARY

Embodiments of the disclosure disclose a method for hybrid automatic repeat request (HARQ) feedback, an apparatus for HARQ feedback, a communication device, and a storage medium.

According to a first aspect of embodiments of the disclosure, a method for HARQ feedback is provided. The method is performed by a terminal. The method includes:
determining whether to perform an HARQ feedback operation for a reception result of a medium access control (MAC) control element (CE) according to downlink control information (DCI) for scheduling the MAC CE.

In some embodiments, determining whether to perform the HARQ feedback operation for the reception result of the MAC CE according to the DCI for scheduling the MAC CE, includes:
determining to perform the HARQ feedback operation for the reception result of the MAC CE in response to the DCI indicating that an HARQ transmission is required;
or determining not to perform the HARQ feedback operation for the reception result of the MAC CE in response to the DCI indicating that an HARQ transmission is not required.

In some embodiments, the method further includes:
determining whether the HARQ transmission is required according to an indication of a target information field in the DCI in response to an HARQ process of the terminal being configured in an enabled state.

In some embodiments, determining whether the HARQ transmission is required according to the indication of the target information field in the DCI, includes:
determining that the HARQ transmission is required in response to the target information field indicating a first value;
or determining that the HARQ transmission is not required in response to the target information field indicating a second value.

In some embodiments, the method further includes:
determining whether the HARQ transmission is required according to scrambling information of a cyclic redundancy check (CRC) of the DCI received in response to an HARQ process of the terminal being configured in a disabled state.

In some embodiments, determining whether the HARQ transmission is required according to the scrambling information of the CRC of the DCI received, includes:
determining that the HARQ transmission is required in response to the scrambling information indicating that the CRC of the DCI is scrambled based on an MAC CE radio network temporary identity (RNTI);
or determining that the HARQ transmission is not required in response to the scrambling information indicating that the CRC of the DCI is not scrambled based on an MAC CE RNTI.

In some embodiments, determining whether the HARQ transmission is required according to the scrambling information of the CRC of the DCI received, includes:
determining that the HARQ transmission is required in response to the scrambling information indicating that the CRC of the DCI is scrambled based on a first predetermined scrambling sequence;
or determining that the HARQ transmission is not required in response to the scrambling information indicating that the CRC of the DCI is scrambled based on a second predetermined scrambling sequence.

In some embodiments, the method further includes:
performing HARQ feedback on a time-frequency resource position indicated by the DCI according to the reception result of the MAC CE in response to determining to perform the HARQ feedback operation for the reception result of the MAC CE.

According to a second aspect of embodiments of the disclosure, a method for HARQ feedback is provided. The method is performed by a base station. The method includes:
sending DCI to a terminal.

The DCI is at least configured: for the terminal to determine whether to perform an HARQ feedback operation for a reception result of an MAC CE.

In some embodiments, the method further includes:
determining indication information of a target information field in the DCI according to whether to require to indicate the terminal to perform the HARQ transmission in response to an HARQ process of the terminal being configured in an enabled state.

In some embodiments, determining the indication information of the target information field in the DCI according to whether to require to indicate the terminal to perform the HARQ transmission, includes:
determining that the indication information of the target information field is a first value in response to requiring to indicate the terminal to perform the HARQ transmission;
or determining that the indication information of the target information field is a second value in response to not requiring to indicate the terminal to perform the HARQ transmission.

In some embodiments, the method further includes:
determining scrambling information of a CRC of the DCI sent to the terminal according to whether to require to indicate the terminal to perform the HARQ transmission in response to an HARQ process of the terminal being configured in a disabled state.

In some embodiments, determining the scrambling information of the CRC of the DCI sent to the terminal according to whether to require to indicate the terminal to perform the HARQ transmission, includes:
determining that the scrambling information for scrambling the CRC of the DCI is an MAC CE RNTI in response to requiring to indicate the terminal to perform the HARQ transmission;
or determining that the scrambling information for scrambling the CRC of the DCI is a first predetermined scrambling sequence in response to requiring to indicate the terminal to perform the HARQ transmission;
or determining that the scrambling information for scrambling the CRC of the DCI is a second predetermined scrambling sequence in response to not requiring to indicate the terminal to perform the HARQ transmission.

According to a third aspect of embodiments of the disclosure, an apparatus for HARQ feedback is provided. The apparatus is applied to a terminal. The apparatus includes a determination module.

The determining module is configured to: determine whether to perform an HARQ feedback operation for a reception result of an MAC CE according to DCI for scheduling the MAC CE.

According to a fourth aspect of embodiments of the disclosure, an apparatus for HARQ feedback is provided. The apparatus is applied to a base station. The apparatus includes a sending module.

The sending module is configured to send DCI to a terminal.

The DCI is at least configured: for the terminal to determine whether to perform an HARQ feedback operation for a reception result of an MAC CE.

According to a fifth aspect of embodiments of the disclosure, a communication device is provided. The communication device includes:
a processor; and
a memory for storing instructions executable by the processor.

The processor is configured to: when executing the executable instructions, perform the method described in any embodiment of the disclosure.

According to a sixth aspect of embodiments of the disclosure, a computer storage medium is provided. The computer storage medium stores a computer-executable program, and when the executable program is executed by a processor, the method described in any embodiment of the disclosure is performed.

In the embodiments of the disclosure, it is determined whether to perform the HARQ feedback operation for the reception result of the MAC CE according to the DCI for scheduling the MAC CE. The terminal may determine to perform the HARQ feedback operation for the reception result of the MAC or determine not to perform the HARQ feedback operation for the reception result of the MAC CE, according to the DCI for scheduling the MAC CE. Therefore, the base station may dynamically adjust whether the MAC CE transmission supports or does not support the HARQ feedback. Compared with the way of supporting or not supporting the HARQ feedback in a fixed manner, the HARQ feedback operation may be more flexible. It is beneficial to reduce the data transmission delay caused by the HARQ feedback and bring a better experience to a user.

### BRIEF DESCRIPTION OF THE DRAWINGS

FIG. 1 is a schematic structural diagram of a wireless communication system according to some embodiments.
FIG. 2 is a schematic diagram illustrating HARQ feedback according to some embodiments.
FIG. 3 is a schematic flowchart of a method for HARQ feedback according to some embodiments.
FIG. 4 is a schematic flowchart of a method for HARQ feedback according to some embodiments.
FIG. 5 is a schematic flowchart of a method for HARQ feedback according to some embodiments.
FIG. 6 is a schematic flowchart of a method for HARQ feedback according to some embodiments.
FIG. 7 is a schematic flowchart of a method for HARQ feedback according to some embodiments.
FIG. 8 is a schematic flowchart of a method for HARQ feedback according to some embodiments.
FIG. 9 is a schematic flowchart of a method for HARQ feedback according to some embodiments.
FIG. 10 is a schematic flowchart of a method for HARQ feedback according to some embodiments.
FIG. 11 is a schematic flowchart of a method for HARQ feedback according to some embodiments.
FIG. 12 is a schematic flowchart of a method for HARQ feedback according to some embodiments.
FIG. 13 is a schematic flowchart of a method for HARQ feedback according to some embodiments.
FIG. 14 is a schematic flowchart of a method for HARQ feedback according to some embodiments.
FIG. 15 is a schematic flowchart of a method for HARQ feedback according to some embodiments.
FIG. 16 is a schematic flowchart of a method for HARQ feedback according to some embodiments.
FIG. 17 is a block diagram of an apparatus for HARQ feedback according to some embodiments.
FIG. 18 is a block diagram of an apparatus for HARQ feedback according to some embodiments.
FIG. 19 is a block diagram of a terminal according to some embodiments.
FIG. 20 is a block diagram of a base station according to some embodiments.

### DETAILED DESCRIPTION

Reference may now be made in detail to embodiments, examples of which are illustrated in the accompanying drawings. The following description refers to the accompanying drawings in which the same numbers in different drawings represent the same or similar elements unless otherwise represented. The implementations set forth in the following description of the embodiments do not represent all implementations consistent with the embodiments of the disclosure. Instead, they are merely examples of apparatuses and methods consistent with aspects related to the embodiments of the disclosure as recited in the appended claims.

Terms used in embodiments of the disclosure are merely for describing specific examples and are not intended to limit the embodiments of the disclosure. The singular forms "a" and "the" used in the embodiments of the disclosure and the appended claims are also intended to include a multiple form, unless other meanings are clearly represented in the context. It should also be understood that the term "and/or" used in the disclosure refers to any or all of possible combinations including one or more associated listed items.

It should be understood that although terms "first", "second", "third", and the like are used in the embodiments of the disclosure to describe various information, the information is not limited to the terms. These terms are merely used to differentiate information of a same type. For example, without departing from the scope of the embodiments of the disclosure, first information is also referred to as second information, and similarly the second information is also referred to as the first information. Depending on the context, for example, the term "if' used herein may be explained as "when" or "while", or "in response to ..., it is determined that".

For the purpose of concision and ease of understanding, the term "greater than" or "less than" is used herein when characterizing the relationship of sizes. However, those skilled in the art may understand that the term "greater than" also covers the meaning of "greater than or equal to" and "less than" also covers the meaning of "less than or equal to".

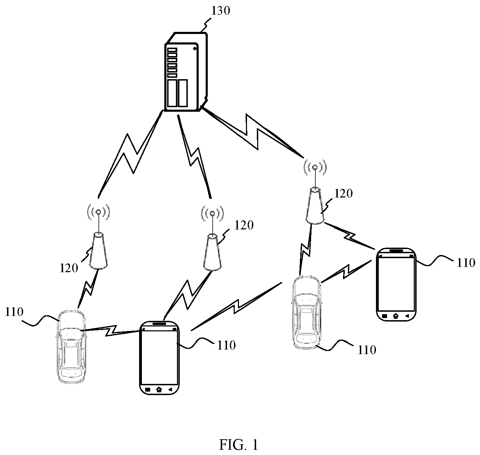

Referring to FIG. 1, it illustrates a schematic structural diagram of a wireless communication system in some embodiments of the disclosure. As illustrated in FIG. 1, the wireless communication system is a communication system based on mobile communication technologies. The wireless communication system may include several user equipments 110 and several base stations 120.

The user equipment 110 may be a device that provides voice and/or data connectivity to a user. The user equipment 110 can communicate with one or more core networks via a radio access network (RAN). The user equipment 110 can be an Internet of Things (IoT) user equipment such as a sensor device, a mobile phone, and a computer with the IoT user equipment such as a fixed, portable, pocket-sized, handheld, built-in computer or vehicle-mounted device, for example, station (STA), subscriber unit, subscriber station, mobile station, mobile, remote station, access point, remote terminal, access terminal, user terminal, user agent, user device, or user equipment. Alternatively, the user equipment 110 may also be a device of an unmanned aircraft. Alternatively, the user equipment 110 may also be a vehicle-mounted device, for example, a trip computer having a wireless communication function or a wireless communication device connected to an external trip computer. Alternatively, the user equipment 110 may also be a roadside device, for example, a street lamp, a signal lamp, or other roadside device, having the wireless communication function.

The base station 120 may be a network side device in the wireless communication system. The wireless communication system may be the 4th generation mobile communication (4G) system, also known as the long term evolution (LTE) system. The wireless communication system may also be the 5th generation mobile communication (5G) system, also known as the new radio (NR) system or 5G NR system. Alternatively, the wireless communication system may also be a next-generation system of the 5G system. The access network in the 5G system may be called the new generation-radio access network (NG-RAN).

The base station 120 may be an evolved base station (eNB) adopted in the 4G system. Alternatively, the base station 120 may also be a base station (gNB) adopting a centralized and distributed architecture in the 5G system. When the base station 120 adopts the centralized distributed architecture, it usually includes a central unit (CU) and at least two distributed units (DUs). The CU is provided with a protocol stack of a packet data convergence protocol (PDCP) layer, a radio link control (RLC) layer, and a media access control (MAC) layer. The DU is provided with a protocol stack having a physical (PHY) layer. The embodiments of the disclosure may not limit the specific implementation manner of the base station 120.

A wireless link can be established between the base station 120 and the terminal 110 through a wireless air interface. In different embodiments, the wireless air interface is a wireless air interface based on the 4G standard. Alternatively, the wireless air interface is a wireless air interface based on the 5G standard, for example, the wireless air interface is a NR. The wireless air interface can also be a wireless air interface based on a standard of next generation mobile communication network technology based on the 5G standard.

In some embodiments, an end to end (E2E) link may also be established between the user equipments 110, for example, a vehicle to vehicle (V2V) communication, a vehicle to infrastructure (V2I) communication, and a vehicle to pedestrian (V2P) communication, in a vehicle to everything (V2X) communication.

The above-mentioned user equipment may be regarded as the terminal device of the following embodiments.

In some embodiments, the above wireless communication system may also include a network management device 130.

The base stations 120 are coupled to the network management device 130 respectively. The network management device 130 may be a core network device in the wireless communication system. For example, the network management device 130 may be a mobility management entity (MME) of an evolved packet core (EPC). Alternatively, the network management device may also be other core network devices, such as a serving gateway (SGW), a public data network gateway (PGW), a policy and charging rules function (PCRF) unit, or a home subscriber server (HSS). The implementation form of the network management device 130 is not limited in the embodiments of the disclosure.

In order to facilitate those skilled in the art to understand, the embodiments of the disclosure enumerate implementation manners to clearly illustrate the technical solutions of the embodiments of the disclosure. Of course, those skilled in the art may understand that the embodiments provided in the disclosure may be executed independently, or may be combined with the methods of other embodiments of the disclosure to be executed together, or may be executed together with some methods in other related technologies after being executed alone or being combined to execute, which is limited in the embodiments of the disclosure.

In order to better understand the technical solution described in any embodiment of the disclosure, first, a non-terrestrial network (NTN) and a hybrid automatic repeat request (HARQ) feedback are explained.

Compared with the terrestrial network, the NTN has characteristics of large transmission delay due to a long distance between two communication parties.

In some embodiments, based on geostationary earth orbiting (GEO) scenario A, a maximum round-trip time (RTT) reaches 541.46 milliseconds(ms); and based on low earth orbiting scenario C, the maximum RTT is 25.77 ms when an orbital altitude of a LEO satellite is 600 kilometers (km).

The HARQ mechanism is one of the most important functions in the NR. Combined with link adaptation, the HARQ may achieve efficient, reliable, and low-latency data transmission in cellular networks.

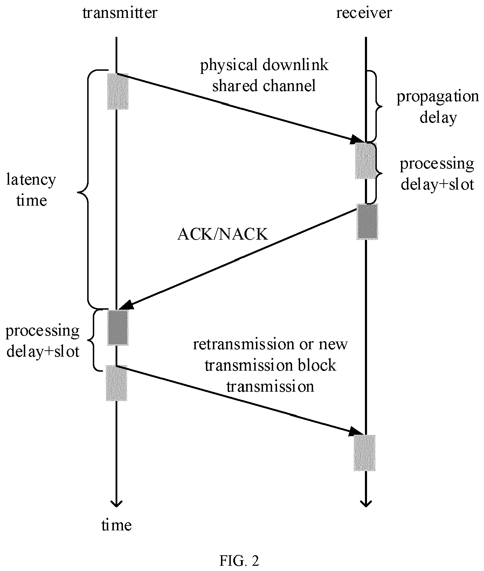

In some embodiments, referring to FIG. 2, the HARQ protocol is used. A transmitter needs to wait for feedback from a receiver before transmitting new data. If the receiver feedbacks a non-acknowledgement (NACK), the transmitter needs to retransmit data packet, otherwise, the transmitter may transmit new data. The stop and wait (SAW) process in the HARQ mechanism reduces the link throughput due to the HARQ RTT delay. To solve this problem, the HARQ mechanism supports multiple parallel HARQ process transmissions, that is, the transmitter may initiate multiple transmissions in parallel without waiting for HARQ completion. In some embodiments, a maximum of 16 HARQ processes are supported in the NR, which is sufficient to accommodate an HARQ RTT of a few milliseconds in the NR.

In the related art, in the design of NTN, an operation of configuring HARQ to be invalid is supported and the operation of configuring HARQ to be invalid may be for each terminal and/or each HARQ. That is, for some HARQ processes of the terminal, uplink HARQ information for a physical downlink shared channel (PDSCH) may not be fed back based on an indication of the base station.

In some embodiments, in order to ensure transmission reliability of some important information, an HARQ feedback mechanism is introduced. For example, for a medium access control (MAC) control element (CE) transmission, the base station and the terminal apply configurations indicated by the MAC CE within a predefined duration after the terminal sends ACK information for the MAC CE transmission.

In some embodiments, in the NTN scenario, the MAC CE transmission is as follows:
1. The MAC CE transmission does not support HARQ feedback. However, the transmission reliability of the MAC CE in this manner may decrease compared to the NR system.
2. The MAC CE transmission supports HARQ feedback. However, this manner may cause the problem of large transmission delay.
3. At least one HARQ-enabled HARQ process is always configured and the base station determines whether to use the HARQ-enabled HARQ process to carry the MAC CE transmission based on implementation. Similar to the above manner, this manner may also cause the problem of transmission delay.

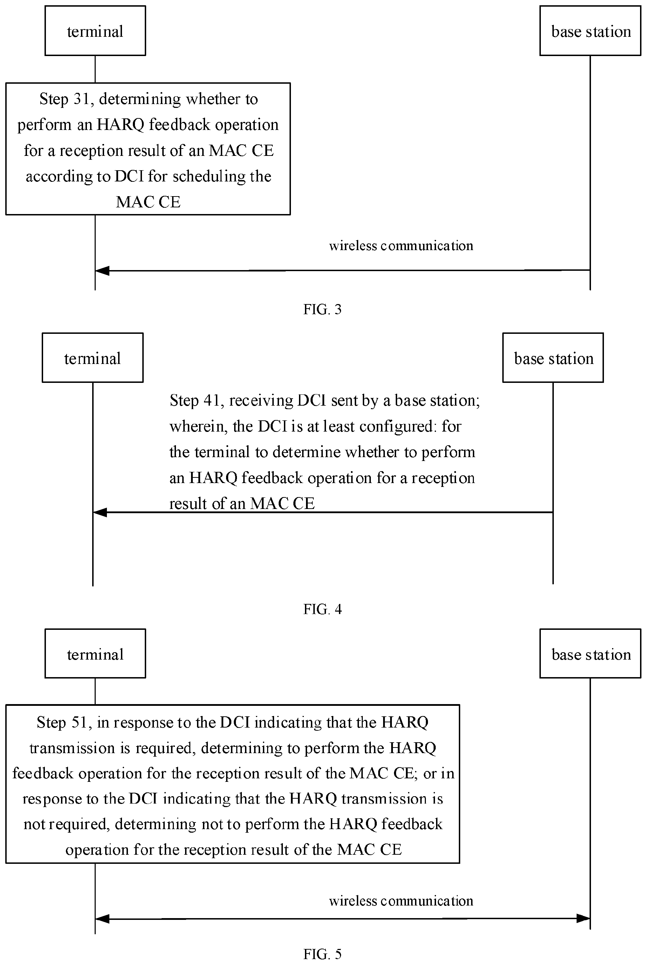

As illustrated in FIG. 3, some embodiments provide a method for HARQ feedback. The method is performed by a terminal. The method includes the following.

Step 31, it is determined whether to perform an HARQ feedback operation for a reception result of an MAC CE according to downlink control information (DCI) for scheduling the MAC CE.

The terminal may be, but not limited to, a mobile phone, a wearable device, a vehicle-mounted terminal, a road side unit (RSU), a smart home terminal, an industrial sensing device and/or a medical device, and the like.

The terminal may communicate with the base station through a satellite of the NTN.

The base station may be an access device for the terminal to access the network. The base station may be various types of base stations, for example, a base station of a third generation mobile communication (3G) network, a base station of a 4G network, a base station of a 5G network, or other evolved base station. The satellite may be a low earth orbiting satellite. It should be noted that, with the evolution of the satellite wireless communication network, the satellite may also be a medium earth orbiting (MEO) satellite or the like.

In some embodiments, before receiving the MAC CE, the terminal receives the DCI for scheduling the MAC CE, which is sent by the base station using the satellite. The terminal determines whether to perform the HARQ feedback operation for the reception result of the MAC CE according to the DCI for scheduling the MAC CE.

In some embodiments, the reception result of the MAC CE may be that the terminal successfully receives the MAC CE or the terminal fails to receive the MAC CE.

In some embodiments, in response to the terminal successfully receiving the MAC CE, the terminal may use the HARQ process to feed back an ACK to the base station; and in response to the terminal failing to receive the MAC CE, the terminal may use the HARQ process to feed back a NACK to the base station.

In some embodiments, during the data transmission of the MAC CE, multiple parallel HARQ process transmissions are supported. In some embodiments, when performing the data transmission of the MAC CE, the base station may initiate transmissions of multiple HARQ processes in parallel.

In some embodiments, the base station supports transmissions of multiple HARQ processes in parallel when performing the data transmission of the MAC CE; the terminal receives the DCI for scheduling the MAC CE, which is sent by the base station using the satellite; and determines whether to perform the HARQ feedback operation for the reception result of the MAC CE according to the DCI for scheduling the MAC CE.

In some embodiments, the base station may configure any HARQ process among the multiple HARQ processes of the terminal to be valid or invalid. In some embodiments, the base station configures all or part of the multiple HARQ processes of the terminal to be invalid. It should be noted that if the HARQ process is valid, it may be that the HARQ process is configured in an enabled state; and if the HARQ process is invalid, it may be that the HARQ process is configured in a disabled state.

In some embodiments, in response to the HARQ process being configured to be invalid, the terminal may not use the HARQ process for HARQ feedback; and in response to the HARQ process being configured to be valid, the terminal may use the HARQ process for HARQ feedback.

In some embodiments, the base station may use a radio resource control (RRC) message to configure any HARQ process among the multiple HARQ processes of the terminal to be valid or invalid.

In some embodiments, the number of configured valid HARQ processes among the multiple HARQ processes is determined according to a required delay.

In some embodiments, in response to the required delay being greater than a delay threshold, it is determined that the number of configured valid HARQ processes among the multiple HARQ processes is less than a number threshold; and in response to the required delay being less than the delay threshold, it is determined that the number of configured valid HARQ processes among the multiple HARQ processes is greater than the number threshold.

In some embodiments, the number of configured invalid HARQ processes among the multiple HARQ processes is determined according to a required delay.

In some embodiments, in response to the required delay being greater than a delay threshold, it is determined that the number of configured invalid HARQ processes among the multiple HARQ processes is greater than a number threshold; and in response to the required delay being less than the delay threshold, it is determined that the number of configured valid HARQ processes among the multiple HARQ processes is less than the number threshold.

In some embodiments, the base station may use the DCI to configure any HARQ process among the multiple HARQ processes of the terminal to be valid or invalid.

In some embodiments, the priority that the base station uses the DCI to configure any process among the multiple HARQ processes of the terminal to be invalid or valid, is higher than the priority that the base station uses the DCI to configure any process among the multiple HARQ processes of the terminal to be invalid or valid.

In some embodiments, the base station uses the RRC message to configure the HARQ process of the terminal to be valid; and in response to the DCI received by the terminal after receiving the RRC message and the DCI for indicating that the base station configures the HARQ process of the terminal to be invalid, it is determined not to perform HARQ feedback for the reception result of the MAC CE.

In some embodiments, the base station uses the RRC message to configure the HARQ process of the terminal to be invalid; and in response to the DCI received by the terminal after receiving the RRC message and the DCI for indicating that the base station configures the HARQ process of the terminal to be valid, it is determined to perform HARQ feedback for the reception result of the MAC CE.

In some embodiments, the base station uses the DCI to configure the HARQ process of the terminal to be valid; and in response to the RRC message received by the terminal after receiving the DCI and the RRC message for indicating that the base station configures the HARQ process of the terminal to be invalid, it is determined to perform HARQ feedback for the reception result of the MAC CE.

In some embodiments, the base station uses the DCI to configure the HARQ process of the terminal to be invalid; and in response to the RRC message received by the terminal after receiving the DCI and the RRC message for indicating that the base station configures the HARQ process of the terminal to be valid, it is determined not to perform HARQ feedback for the reception result of the MAC CE.

In some embodiments, in response to the DCI for scheduling the MAC CE and for indicating that the HARQ process is valid, it is determined to perform HARQ feedback for the reception result of the MAC CE; and in response to the DCI for scheduling the MAC CE and for indicating that the HARQ process is invalid, it is determined not to perform the HARQ feedback for the reception result of the MAC CE.

In some embodiments, the base station uses the RRC message to configure the HARQ process of the terminal to be valid; and after receiving the RRC message, the terminal determines to perform HARQ feedback for the reception result of the MAC CE in response to the DCI for scheduling the MAC CE and for indicating that an HARQ transmission is required.

In some embodiments, the base station uses the RRC message to configure the HARQ process of the terminal to be valid; and after receiving the RRC message, the terminal determines not to perform HARQ feedback for the reception result of the MAC CE in response to the DCI for scheduling the MAC CE and for indicating that an HARQ transmission is not required.

In some embodiments, the base station uses the RRC message to configure the HARQ process of the terminal to be invalid; and after receiving the RRC message, the terminal determines to perform HARQ feedback for the reception result of the MAC CE in response to the DCI for scheduling the MAC CE and for indicating that an HARQ transmission is required.

In some embodiments, the base station uses the RRC message to configure the HARQ process of the terminal to be invalid; and after receiving the RRC message, the terminal determines not to perform HARQ feedback for the reception result of the MAC CE in response to the DCI for scheduling the MAC CE and for indicating that an HARQ transmission is not required.

In some embodiments, the base station uses the DCI to explicitly indicate whether the HARQ transmission is required.

In some embodiments, the explicit indication may be that an information field is set in the DCI to indicate whether the HARQ transmission is required.

In some embodiments, the information field is set to a first value in response to the HARQ transmission being required; and the information field is set to a second value in response to the HARQ transmission being not required. The information field includes: at least one bit. For example, the information field includes one bit and the one bit may take a value of "0" or "1"; and the first value is "0" and the second value is "1".

In some embodiments, in response to the information field of the DCI being set to the first value, it is determined to perform the HARQ feedback operation for the reception result of the MAC CE; and in response to the information field of the DCI being set to the second value, it is determined not to perform the HARQ feedback operation for the reception result of the MAC CE.

In some embodiments, in response to the information field of the DCI being set to the first value, it is determined not to perform the HARQ feedback operation for the reception result of the MAC CE; and in response to the information field of the DCI being set to the second value, it is determined to perform the HARQ feedback operation for the reception result of the MAC CE.

In some embodiments, the base station uses the DCI to implicitly indicate whether the HARQ transmission is required.

In some embodiments, the implicit indication may be to scramble the DCI with different scrambling manners to indicate whether the HARQ transmission is required.

In some embodiments, in response to the HARQ transmission being required, the DCI is scrambled using a first scrambling manner; and in response to the HARQ transmission being not required, the DCI is scrambled using a second scrambling manner.

In some embodiments, in response to the DCI scrambled in the first scrambling manner, it is determined to perform the HARQ feedback operation for the reception result of the MAC CE; and in response to the DCI scrambled by the second scrambling manner, it is determined not to perform the HARQ feedback operation for the reception result of the MAC CE.

In some embodiments, the DCI indicates a time-frequency domain resource position where the terminal performs HARQ feedback for the reception result of the MAC CE.

In some embodiments, it is determined whether to perform the HARQ feedback operation for the reception result of the MAC CE at the time-frequency domain resource position indicated by the DCI according to the DCI for scheduling the MAC CE.

In the embodiments of the disclosure, the terminal may determine to perform the HARQ feedback for the reception result of the MAC CE or not perform the HARQ feedback for the reception result of the MAC CE according to the DCI for scheduling the MAC CE. Therefore, the base station may dynamically adjust whether the MAC CE transmission supports or does not support the HARQ feedback. Compared with the way of supporting or not supporting the HARQ feedback in a fixed manner, the HARQ feedback operation may be more flexible. It is beneficial to reduce the data transmission delay caused by the HARQ feedback and bring a better experience to a user.

It should be noted that those skilled in the art may understand that the methods provided in the embodiments of the disclosure may be executed alone or may be executed together with some methods in the embodiments of the disclosure or some methods in the related art.

As illustrated in FIG. 4, some embodiments provide a method for HARQ feedback. The method is performed by a terminal. The method includes the following.

Step 41, DCI sent by a base station is received.

The DCI is at least configured: for the terminal to determine whether to perform an HARQ feedback operation for a reception result of an MAC CE.

In some embodiments, before the MAC CE transmission is performed for the terminal, the terminal receives the DCI sent by the base station; and the terminal determines whether to perform the HARQ feedback operation for the reception result of the MAC CE according to the DCI for scheduling the MAC CE.

In some embodiments, an information field having a predetermined length is set at a predetermined position in the DCI. In response to the information field for indicating the first value, it is determined to perform HARQ feedback for the reception result of the MAC CE; and in response to the information field for indicating the second value, it is determined not to perform HARQ feedback for the reception result of the MAC CE.

In some embodiments, the DCI may be scrambled by different scrambling manners. In response to the DCI scrambled in the first scrambling manner, it is determined to perform HARQ feedback for the reception result of the MAC CE; and in response to the DCI scrambled in the second scrambling manner, it is determined not to perform HARQ feedback for the reception result of the MAC CE.

In some embodiments, before receiving the DCI sent by the base station, the terminal further receives the RRC message. The RRC message is at least configured: for the terminal to determine whether to perform the HARQ feedback operation for the reception result of the MAC CE. The indication priority of the DCI is greater than the indication priority of the RRC message. That is, after the terminal receives the DCI after receiving the RRC message, the terminal ignores the indication of the RRC message and preferentially adopts the indication of the DCI and determines whether to perform the HARQ feedback operation for the reception result of the MAC CE.

It should be noted that those skilled in the art may understand that the methods provided in the embodiments of the disclosure may be executed alone or may be executed together with some methods in the embodiments of the disclosure or some methods in the related art.

As illustrated in FIG. 5, some embodiments provide a method for HARQ feedback. The method is performed by a terminal. The method includes the following.

Step 51, in response to the DCI indicating that the HARQ transmission is required, it is determined to perform the HARQ feedback operation for the reception result of the MAC CE; or in response to the DCI indicating that the HARQ transmission is not required, it is determined not to perform the HARQ feedback operation for the reception result of the MAC CE.

In some embodiments, whether the HARQ transmission is required is determined according to the importance of the MAC CE transmission.

In some embodiments, in response to the importance of the MAC CE transmission being greater than the importance threshold, it is determined that the HARQ transmission is required; and in response to the importance of the MAC CE transmission being less than the importance threshold, it is determined that the HARQ transmission is not required. The importance of the MAC CE transmission is used to indicate the importance degree of transmitting the MAC CE. The higher the importance degree of transmitting the MAC CE, the greater the importance of the MAC CE transmission.

In some embodiments, an information field having a predetermined length is set at a predetermined position in the DCI. In response to the information field indicating the first value, it is determined that the HARQ transmission is required; and in response to the information field indicating the second value, it is determined that the HARQ transmission is not required.

In some embodiments, the DCI may be scrambled by different scrambling manner. In response to the DCI being scrambled by using the first scrambling manner, it is determined that the HARQ transmission is required; and in response to the DCI being scrambled by using the second scrambling manner, it is determined that the HARQ transmission is not required.

It should be noted that those skilled in the art may understand that the methods provided in the embodiments of the disclosure may be executed alone or may be executed together with some methods in the embodiments of the disclosure or some methods in the related art.

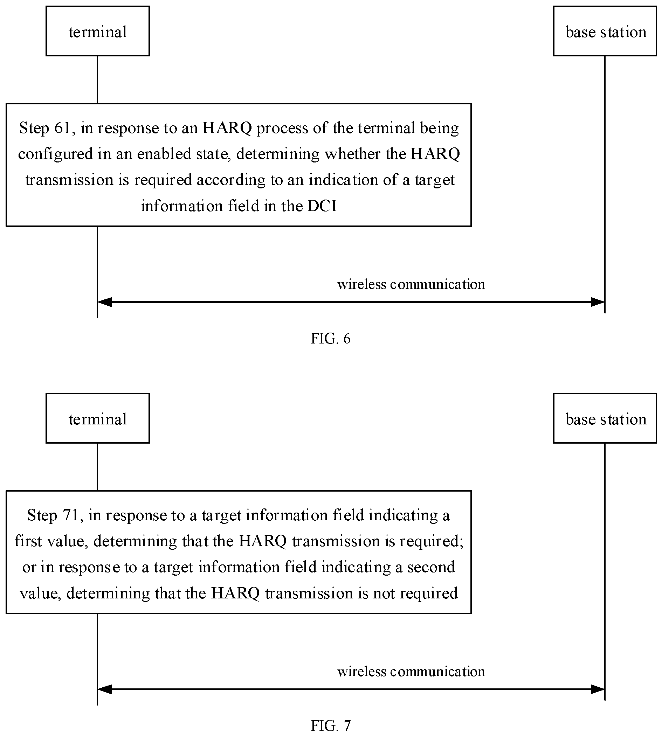

As illustrated in FIG. 6, some embodiments provide a method for HARQ feedback. The method is performed by a terminal. The method includes the following.

Step 61, in response to an HARQ process of the terminal being configured in an enabled state, it is determined whether the HARQ transmission is required according to an indication of a target information field in the DCI.

The target information field in the DCI may be an information field with a predetermined length at a predetermined time-frequency domain position in the DCI.

In some embodiments, the HARQ process of the terminal is configured in the enabled state by an RRC message sent by the base station. It is determined whether the HARQ transmission is required according to the indication of the target information field in the DCI.

In some embodiments, in response to the HARQ process of the terminal being configured in the enabled state and the target information field in the DCI carries a first indication, it is determined that the HARQ transmission is required; and in response to the HARQ process of the terminal being configured in the enabled state and the target information field in the DCI carries a second indication, it is determined that the HARQ transmission is not required.

In some embodiments, before receiving the DCI sent by the base station, the terminal further receives the RRC message. The RRC message at least indicates that the HARQ process is configured in an enabled state or a valid state. The indication priority of the DCI is greater than the indication priority of the RRC message. That is, after the terminal receives the DCI after receiving the RRC message, the terminal ignores the indication of the RRC message and preferentially adopts the indication of the DCI and determines whether to perform the HARQ feedback operation for the reception result of the MAC CE.

In some embodiments, if the HARQ process of the terminal is configured in an enabled state by the RRC message and the DCI indicates that the HARQ transmission is not required, the HARQ feedback for the reception result of the MAC CE is not performed. In other embodiments, if the HARQ process of the terminal is configured in an invalid state by the RRC message and the DCI indicates that the HARQ transmission is required, the HARQ feedback for the reception result of the MAC CE is performed.

It should be noted that those skilled in the art may understand that the methods provided in the embodiments of the disclosure may be executed alone or may be executed together with some methods in the embodiments of the disclosure or some methods in the related art.

As illustrated in FIG. 7, some embodiments provide a method for HARQ feedback. The method is performed by a terminal. The method further includes the following.

Step 71, in response to a target information field indicating a first value, it is determined that the HARQ transmission is required; or in response to a target information field indicating a second value, it is determined that the HARQ transmission is not required.

In some embodiments, in response to the target information field indicating the first value, it is determined that the HARQ transmission is required; and it is determined to perform HARQ feedback for the reception result of the MAC CE.

In some embodiments, in response to the target information field indicating the second value, it is determined that the HARQ transmission is not required; and it is determined not to perform HARQ feedback for the reception result of the MAC CE.

In some embodiments, the target information field includes one bit, the first value may be "0" and the second value may be "1".

It should be noted that those skilled in the art may understand that the methods provided in the embodiments of the disclosure may be executed alone or may be executed together with some methods in the embodiments of the disclosure or some methods in the related art.

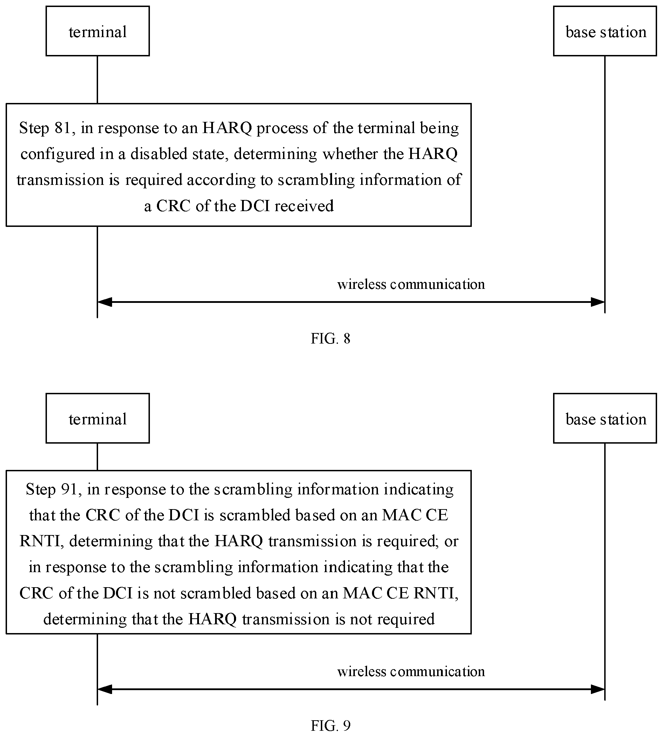

As illustrated in FIG. 8, some embodiments provide a method for HARQ feedback. The method is performed by a terminal. The method includes the following.

Step 81, in response to an HARQ process of the terminal being configured in a disabled state, it is determined whether the HARQ transmission is required according to scrambling information of a cyclic redundancy check (CRC) of the DCI received.

In some embodiments, the HARQ process of the terminal is configured in an invalid state by the RRC message sent by the base station. Whether the HARQ transmission is required is determined according to the scrambling information of the CRC of the DCI received.

In some embodiments, in response to the HARQ process of the terminal being configured in the invalid state and the scrambling information of the CRC is first scrambling information, it is determined that the HARQ transmission is required; and in response to the HARQ process of the terminal being configured in the invalid state and the scrambling information of the CRC is second scrambling information, it is determined that the HARQ transmission is not required. The HARQ process may be enabled in response to the DCI indicating that the HARQ transmission is required.

In some embodiments, before receiving the DCI sent by the base station, the terminal further receives the RRC message. The RRC message at least indicates that the HARQ process is configured in an enabled state or a valid state. The indication priority of the DCI is greater than the indication priority of the RRC message. That is, after the terminal receives the DCI after receiving the RRC message, the terminal ignores the indication of the RRC message and preferentially adopts the indication of the DCI and determines whether to perform the HARQ feedback operation for the reception result of the MAC CE.

In some embodiments, if the HARQ process of the terminal is configured in the invalid state by the RRC message and the DCI indicates that the HARQ transmission is required, the HARQ feedback for the reception result of the MAC CE is performed.

It should be noted that those skilled in the art may understand that the methods provided in the embodiments of the disclosure may be executed alone or may be executed together with some methods in the embodiments of the disclosure or some methods in the related art.

As illustrated in FIG. 9, some embodiments provide a method for HARQ feedback. The method is performed by a terminal. The method includes the following.

Step 91, in response to the scrambling information indicating that the CRC of the DCI is scrambled based on an MAC CE RNTI, it is determined that the HARQ transmission is required; or in response to the scrambling information indicating that the CRC of the DCI is not scrambled based on an MAC CE RNTI, it is determined that the HARQ transmission is not required.

In some embodiments, the base station sends the MAC CE RNTI to the terminal in advance; after receiving the DCI, the terminal compares the scrambling information of the DCI with the MAC CE RNTI to obtain a comparison result; and in response to the comparison result indicating that the scrambling information is consistent with the MAC CE RNTI, it is determined that the HARQ transmission is required.

In some embodiments, the base station sends the MAC CE RNTI to the terminal in advance; after receiving the DCI, the terminal compares the scrambling information of the DCI with the MAC CE RNTI to obtain a comparison result; and in response to the comparison result indicating that the scrambling information is inconsistent with the MAC CE RNTI, it is determined that the HARQ transmission is not required.

In some embodiments, the MAC CE RNTI may also be stored in the terminal in advance.

It should be noted that those skilled in the art may understand that the methods provided in the embodiments of the disclosure may be executed alone or may be executed together with some methods in the embodiments of the disclosure or some methods in the related art.

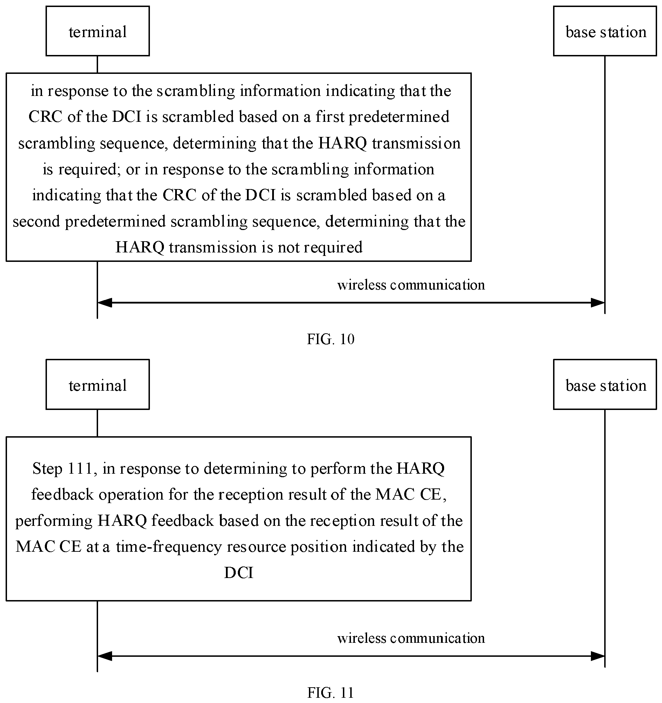

As illustrated in FIG. 10, some embodiments provide a method for HARQ feedback. The method is performed by a terminal. The method includes the following.

Step 101, in response to the scrambling information indicating that the CRC of the DCI is scrambled based on a first predetermined scrambling sequence, it is determined that the HARQ transmission is required; or in response to the scrambling information indicating that the CRC of the DCI is scrambled based on a second predetermined scrambling sequence, it is determined that the HARQ transmission is not required.

In some embodiments, the base station sends the first predetermined scrambling sequence to the terminal in advance; after receiving the DCI, the terminal compares the scrambling information of the DCI with the MAC CE RNTI to obtain a comparison result; and in response to the comparison result indicates that the scrambling information of the DCI is consistent with the first predetermined scrambling sequence, it is determined that the HARQ transmission is required.

In some embodiments, the base station sends the second predetermined scrambling sequence to the terminal in advance; after receiving the DCI, the terminal compares the scrambling information of the DCI with the second predetermined scrambling sequence to obtain a comparison result; and in response to the comparison result indicates that the scrambling information of the DCI is consistent with the second predetermined scrambling sequence, it is determined that the HARQ transmission is not required.

It should be noted that those skilled in the art may understand that the methods provided in the embodiments of the disclosure may be executed alone or may be executed together with some methods in the embodiments of the disclosure or some methods in the related art.

As illustrated in FIG. 11, some embodiments provide a method for HARQ feedback. The method is performed by a terminal. The method includes the following.

Step 111, in response to determining to perform the HARQ feedback operation for the reception result of the MAC CE, HARQ feedback is performed based on the reception result of the MAC CE at a time-frequency resource position indicated by the DCI.

In some embodiments, the reception result of the MAC CE may be that the terminal successfully receives the MAC CE or the terminal fails to receive the MAC CE.

In some embodiments, in response to the reception result indicating that the terminal successfully receives the MAC CE, the HARQ process is used to feed back an ACK to the base station at the time-frequency resource position indicated by the DCI; and in response to the reception result indicating that the reception of the MAC CE fails, the HARQ process is used to feed back an NACK to the base station at the time-frequency resource position indicated by the DCI.

It should be noted that those skilled in the art may understand that the methods provided in the embodiments of the disclosure may be executed alone or may be executed together with some methods in the embodiments of the disclosure or some methods in the related art.

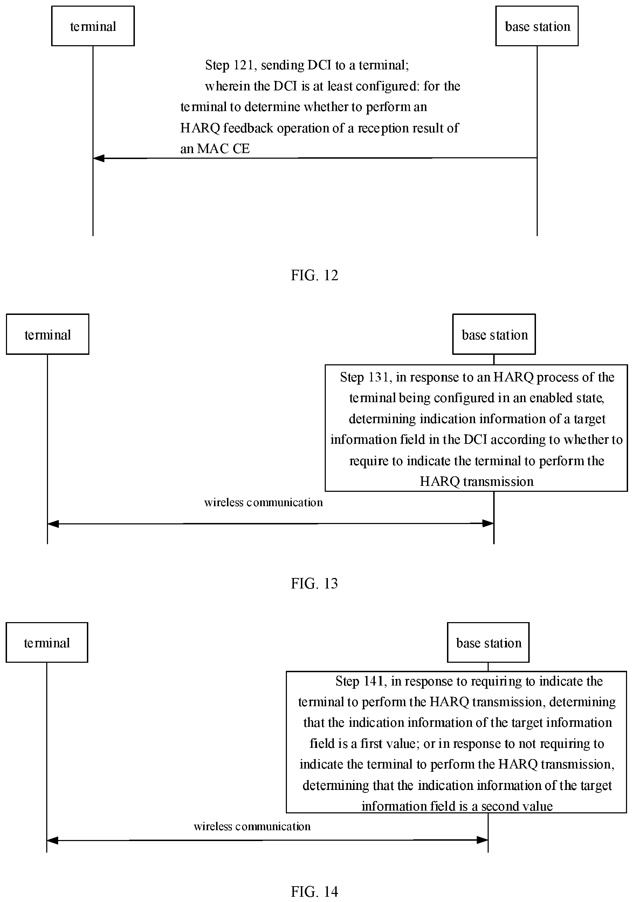

As illustrated in FIG. 12, some embodiments provide a method for HARQ feedback. The method is performed by a base station. The method includes the following.

Step 121, DCI is sent to a terminal.

The DCI is at least configured: for the terminal to determine whether to perform an HARQ feedback operation of a reception result of an MAC CE.

The terminal may be, but not limited to, a mobile phone, a wearable device, a vehicle-mounted terminal, an RSU, a smart home terminal, an industrial sensing device, and/or a medical device, and the like.

The terminal may communicate with the base station through a satellite.

The base station may be an access device for the terminal to access the network. The base station may be various types of base stations, for example, a base station of a 3G network, a base station of a 4G network, a base station of a 5G network, or other evolved base station. The satellite may be a LEO satellite. It should be noted that, with the evolution of the satellite wireless communication network, the satellite may also be a MEO satellite or the like.

In some embodiments, before receiving the MAC CE, the terminal receives the DCI for scheduling the MAC CE, which is sent by the base station using the satellite. The terminal determines whether to perform the HARQ feedback operation for the reception result of the MAC CE according to the DCI for scheduling the MAC CE.

In some embodiments, in response to the terminal successfully receiving the MAC CE, the HARQ process is used to feed back an ACK to the base station; and in response to the failure to receive the MAC CE, the HARQ process is used to feed back an NACK to the base station.

In some embodiments, during the data transmission of the MAC CE, multiple parallel HARQ process transmissions are supported. In some embodiments, when performing the data transmission of the MAC CE, the base station may initiate transmissions of multiple HARQ processes in parallel.

In some embodiments, the base station supports transmissions of multiple HARQ processes in parallel when performing the data transmission of the MAC CE; the terminal receives the DCI for scheduling the MAC CE, which is sent by the base station using the satellite; and determines whether to perform the HARQ feedback operation for the reception result of the MAC CE according to the DCI for scheduling the MAC CE.

In some embodiments, the base station may configure any HARQ process among the multiple HARQ processes of the terminal to be valid or invalid. In some embodiments, the base station configures all or part of the multiple HARQ processes of the terminal to be invalid. It should be noted that if the HARQ process is valid, it may be that the HARQ process is configured in an enabled state; and if the HARQ process is invalid, it may be that the HARQ process is configured in a disabled state.

In some embodiments, in response to the HARQ process being configured to be invalid, the HARQ process may not be used for HARQ feedback; and in response to the HARQ process being configured to be valid, the HARQ process may be used for HARQ feedback.

In some embodiments, the base station may use a radio resource control (RRC) message to configure any HARQ process among the multiple HARQ processes of the terminal to be valid or invalid.

In some embodiments, the number of configured valid HARQ processes among the multiple HARQ processes is determined according to a required delay.

In some embodiments, in response to the required delay being greater than a delay threshold, it is determined that the number of configured valid HARQ processes among the multiple HARQ processes is less than a number threshold; and in response to the required delay being less than the delay threshold, it is determined that the number of configured valid HARQ processes among the multiple HARQ processes is greater than the number threshold.

In some embodiments, the number of configured invalid HARQ processes among the multiple HARQ processes is determined according to a required delay.

In some embodiments, in response to the required delay being greater than a delay threshold, it is determined that the number of configured invalid HARQ processes among the multiple HARQ processes is greater than a number threshold; and in response to the required delay being less than the delay threshold, it is determined that the number of configured valid HARQ processes among the multiple HARQ processes is less than the number threshold.

In some embodiments, the base station may use the DCI to configure any HARQ process among the multiple HARQ processes of the terminal to be valid or invalid.

In some embodiments, the priority that the base station uses the DCI to configure any process among the multiple HARQ processes of the terminal to be invalid or valid, is higher than the priority that the base station uses the DCI to configure any process among the multiple HARQ processes of the terminal to be invalid or valid.

In some embodiments, the base station uses the RRC message to configure the HARQ process of the terminal to be valid; and in response to the DCI received by the terminal after receiving the RRC message and the DCI for indicating that the base station configures the HARQ process of the terminal to be invalid, it is determined not to perform HARQ feedback for the reception result of the MAC CE.

In some embodiments, the base station uses the RRC message to configure the HARQ process of the terminal to be invalid; and in response to the DCI received by the terminal after receiving the RRC message and the DCI for indicating that the base station configures the HARQ process of the terminal to be valid, it is determined to perform HARQ feedback for the reception result of the MAC CE.

In some embodiments, the base station uses the DCI to configure the HARQ process of the terminal to be valid; and in response to the RRC message received by the terminal after receiving the DCI and the RRC message for indicating that the base station configures the HARQ process of the terminal to be invalid, it is determined to perform HARQ feedback for the reception result of the MAC CE.

In some embodiments, the base station uses the DCI to configure the HARQ process of the terminal to be invalid; and in response to the RRC message received by the terminal after receiving the DCI and the RRC message for indicating that the base station configures the HARQ process of the terminal to be valid, it is determined not to perform HARQ feedback for the reception result of the MAC CE.

In some embodiments, in response to the DCI for scheduling the MAC CE and for indicating that the HARQ process is valid, it is determined to perform HARQ feedback for the reception result of the MAC CE; and in response to the DCI for scheduling the MAC CE and for indicating that the HARQ process is invalid, it is determined not to perform the HARQ feedback for the reception result of the MAC CE.

In some embodiments, the base station uses the RRC message to configure the HARQ process of the terminal to be valid; and after receiving the RRC message, the terminal determines to perform HARQ feedback for the reception result of the MAC CE in response to the DCI for scheduling the MAC CE and for indicating that an HARQ transmission is required.

In some embodiments, the base station uses the RRC message to configure the HARQ process of the terminal to be valid; and after receiving the RRC message, the terminal determines not to perform HARQ feedback for the reception result of the MAC CE in response to the DCI for scheduling the MAC CE and for indicating that an HARQ transmission is not required.

In some embodiments, the base station uses the RRC message to configure the HARQ process of the terminal to be invalid; and after receiving the RRC message, the terminal determines to perform HARQ feedback for the reception result of the MAC CE in response to the DCI for scheduling the MAC CE and for indicating that an HARQ transmission is required.

In some embodiments, the base station uses the RRC message to configure the HARQ process of the terminal to be invalid; and after receiving the RRC message, the terminal determines not to perform HARQ feedback for the reception result of the MAC CE in response to the DCI for scheduling the MAC CE and for indicating that an HARQ transmission is not required.

In some embodiments, the base station uses the DCI to explicitly indicate whether the HARQ transmission is required.

In some embodiments, the explicit indication may be that an information field is set in the DCI to indicate whether the HARQ transmission is required.

In some embodiments, the information field is set to a first value in response to the HARQ transmission being required; and the information field is set to a second value in response to the HARQ transmission being not required. The information field includes: at least one bit. For example, the information field includes one bit and the one bit may take a value of "0" or "1 "; and the first value is "0" and the second value is "1".

In some embodiments, in response to the information field of the DCI being set to the first value, it is determined to perform the HARQ feedback operation for the reception result of the MAC CE; and in response to the information field of the DCI being set to the second value, it is determined not to perform the HARQ feedback operation for the reception result of the MAC CE.

In some embodiments, in response to the information field of the DCI being set to the first value, it is determined not to perform the HARQ feedback operation for the reception result of the MAC CE; and in response to the information field of the DCI being set to the second value, it is determined to perform the HARQ feedback operation for the reception result of the MAC CE.

In some embodiments, the base station uses the DCI to implicitly indicate whether the HARQ transmission is required.

In some embodiments, the implicit indication may be to scramble the DCI with different scrambling manners to indicate whether the HARQ transmission is required.

In some embodiments, in response to the HARQ transmission being required, the DCI is scrambled using a first scrambling manner; and in response to the HARQ transmission being not required, the DCI is scrambled using a second scrambling manner.

In some embodiments, in response to the DCI scrambled in the first scrambling manner, it is determined to perform the HARQ feedback operation for the reception result of the MAC CE; and in response to the DCI scrambled by the second scrambling manner, it is determined not to perform the HARQ feedback operation for the reception result of the MAC CE.

In some embodiments, the DCI indicates a time-frequency domain resource position where the terminal performs HARQ feedback for the reception result of the MAC CE.

In some embodiments, it is determined whether to perform the HARQ feedback operation for the reception result of the MAC CE at the time-frequency domain resource position indicated by the DCI according to the DCI for scheduling the MAC CE.

It should be noted that those skilled in the art may understand that the methods provided in the embodiments of the disclosure may be executed alone or may be executed together with some methods in the embodiments of the disclosure or some methods in the related art.

As illustrated in FIG. 13, some embodiments provide a method for HARQ feedback. The method is performed by a base station. The method includes the following.

Step 131, in response to an HARQ process of the terminal being configured in an enabled state, indication information of a target information field in the DCI is determined according to whether to require to indicate the terminal to perform the HARQ transmission.

The target information field in the DCI may be an information field with a predetermined length at a predetermined time-frequency domain position in the DCI.

In some embodiments, in response to the HARQ process of the terminal being configured in the enabled state and the HARQ transmission is required, the target information field in the DCI carries the first indication; and in response to the HARQ process of the terminal being configured in the enabled state and the HARQ transmission is not required, the target information field in the DCI carries the second indication.

It should be noted that those skilled in the art may understand that the methods provided in the embodiments of the disclosure may be executed alone or may be executed together with some methods in the embodiments of the disclosure or some methods in the related art.

As illustrated in FIG. 14, some embodiments provide a method for HARQ feedback. The method is performed by a base station. The method includes the following.

Step 141, in response to requiring to indicate the terminal to perform the HARQ transmission, it is determined that the indication information of the target information field is a first value; or in response to not requiring to indicate the terminal to perform the HARQ transmission, it is determined that the indication information of the target information field is a second value.

In some embodiments, in response to the HARQ process of the terminal being configured in the enabled state and the HARQ transmission is required, the target information field in the DCI carries the first value; and in response to the HARQ process of the terminal being configured in the enabled state and the HARQ transmission is not required, the target information field in the DCI carries the second value.

In some embodiments, the target information field includes: at least one bit. For example, the target information field includes one bit, and the bit may take a value of "0" or "1". The first value is "0" and the second value is "1".

It should be noted that those skilled in the art may understand that the methods provided in the embodiments of the disclosure may be executed alone or may be executed together with some methods in the embodiments of the disclosure or some methods in the related art.

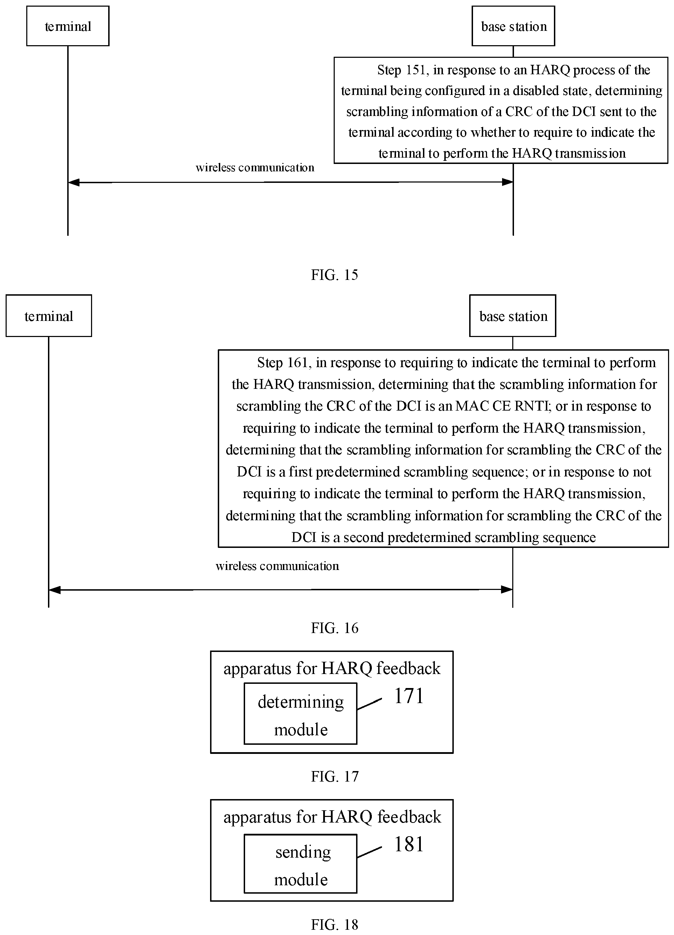

As illustrated in FIG. 15, some embodiments provide a method for HARQ feedback. The method is performed by a base station. The method includes the following.

Step 151, in response to an HARQ process of the terminal being configured in a disabled state, scrambling information of a CRC of the DCI sent to the terminal is determined according to whether to require to indicate the terminal to perform the HARQ transmission.

In some embodiments, in response to the HARQ process of the terminal being configured in a disabled state and the HARQ transmission is required, it is determined that the scrambling information of the CRC of the DCI sent to the terminal is the first scrambling information; and in response to the HARQ process of the terminal being configured in a disabled state and the HARQ transmission is not required, it is determined that the scrambling information of the CRC of the DCI sent to the terminal is the second scrambling information.

It should be noted that those skilled in the art may understand that the methods provided in the embodiments of the disclosure may be executed alone or may be executed together with some methods in the embodiments of the disclosure or some methods in the related art.

As illustrated in FIG. 16, some embodiments provide a method for HARQ feedback. The method is performed by a base station. The method includes the following.

Step 161, in response to requiring to indicate the terminal to perform the HARQ transmission, it is determined that the scrambling information for scrambling the CRC of the DCI is an MAC CE RNTI; or in response to requiring to indicate the terminal to perform the HARQ transmission, it is determined that the scrambling information for scrambling the CRC of the DCI is a first predetermined scrambling sequence; or in response to not requiring to indicate the terminal to perform the HARQ transmission, it is determined that the scrambling information for scrambling the CRC of the DCI is a second predetermined scrambling sequence.

In some embodiments, the base station sends the MAC CE RNTI to the terminal in advance; after receiving the DCI, the terminal compares the scrambling information of the DCI with the MAC CE RNTI to obtain a comparison result; and in response to the comparison result indicating that the scrambling information is consistent with the MAC CE RNTI, it is determined that the HARQ transmission is required.

In some embodiments, the base station sends the MAC CE RNTI to the terminal in advance; after receiving the DCI, the terminal compares the scrambling information of the DCI with the MAC CE RNTI to obtain a comparison result; and in response to the comparison result indicating that the scrambling information is inconsistent with the MAC CE RNTI, it is determined that the HARQ transmission is not required.

In some embodiments, the base station sends the first predetermined scrambling sequence to the terminal in advance; after receiving the DCI, the terminal compares the scrambling information of the DCI with the MAC CE RNTI to obtain a comparison result; in response to the comparison result indicating that the scrambling information of the DCI is consistent with the first predetermined scrambling sequence, it is determined that the HARQ transmission is required.

In some embodiments, the base station sends the second predetermined scrambling sequence to the terminal in advance; after receiving the DCI, the terminal compares the scrambling information of the DCI with the second predetermined scrambling sequence to obtain a comparison result; in response to the comparison result indicating that the scrambling information of the DCI is consistent with the second predetermined scrambling sequence, it is determined that the HARQ transmission is not required.

In some embodiments, the MAC CE RNTI may also be stored in the terminal in advance.

It should be noted that those skilled in the art may understand that the methods provided in the embodiments of the disclosure may be executed alone or may be executed together with some methods in the embodiments of the disclosure or some methods in the related art.

As illustrated in FIG. 17, some embodiments of the disclosure provide an apparatus for HARQ. The apparatus is applied to a terminal. The apparatus includes a determining module 171.

The determining module 171 is configured to: determine whether to perform an HARQ feedback operation for a reception result of an MAC CE according to DCI for scheduling the MAC CE.

It should be noted that those skilled in the art may understand that the methods provided in the embodiments of the disclosure may be executed alone or may be executed together with some methods in the embodiments of the disclosure or some methods in the related art.

As illustrated in FIG. 18, some embodiments of the disclosure provide an apparatus for HARQ. The apparatus is applied to a base station. The device includes a sending module 181.

The sending module 181 is configured to send DCI to a terminal.

The DCI is at least configured: for the terminal to determine whether to perform an HARQ feedback operation for a reception result of an MAC CE.

Regarding the apparatuses in the above-mentioned embodiments, the specific manner in which each module performs an operation has been described in detail in the method embodiments and will not be described in detail herein.

Embodiments of the disclosure provide a communication device. The communication device includes:
a processor; and
a memory for storing processor-executable instructions.

The processor is configured to, when executing the executable instructions, perform the method applied to any embodiment of the disclosure.

The processor may include various types of storage media, which are non-transitory computer storage media that may continue to memorize and store information on the communication device after the power is turned off.

The processor may be connected to the memory through a bus or the like, and is used to read the executable program stored on the memory.

Some embodiments of the disclosure further provide a computer storage medium. The computer storage medium stores a computer-executable program, and when the executable program is executed by a processor, the method of any embodiment of the disclosure is performed.

Regarding the devices in the above-mentioned embodiments, the specific manner in which each module performs an operation has been described in detail in the method embodiments and will not be described in detail herein.

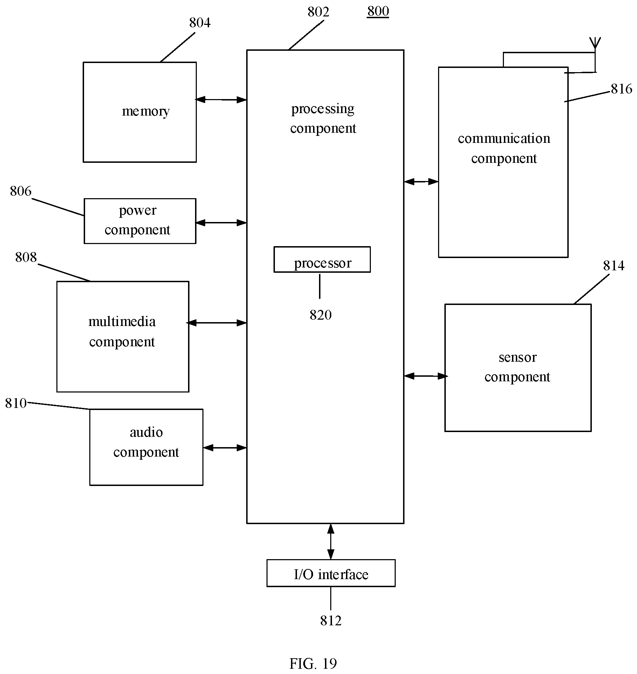

As illustrated in FIG. 19, some embodiments of the disclosure provide a structure of a terminal.

Referring to the terminal 800 in FIG. 19, some embodiments provide a terminal 800, which may be a mobile phone, a computer, a digital broadcast terminal, a messaging device, a gaming console, a tablet, a medical device, exercise equipment, a personal digital assistant, and the like.

Referring to FIG. 19, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one some embodiment, the communication component 816 receives a broadcast signal or broadcast associated information from an external broadcast management system via a broadcast channel. In one some embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

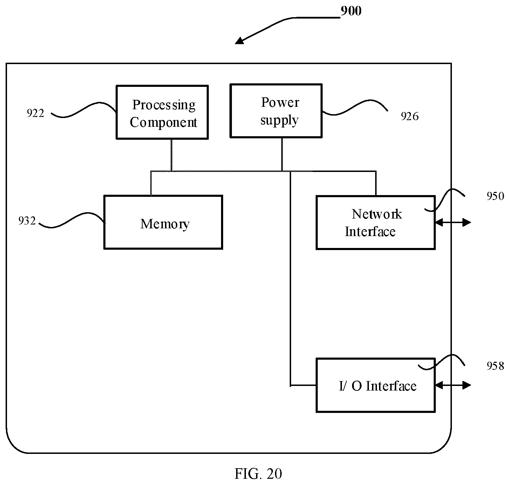

As illustrated in FIG. 20, some embodiments of the disclosure show a structure of a base station. For example, the base station 900 may be provided as a network-side device. Referring to FIG. 20, the base station 900 includes a processing component 922, which further includes one or more processors, and a memory resource, represented by a memory 932, for storing instructions executable by the processing component 922, such as applications. An application stored in the memory 932 may include one or more modules, each corresponding to a set of instructions. Furthermore, the processing component 922 is configured to execute instructions to perform the above-described methods applied to the base station.

The base station 900 may also include a power supply 926 configured to perform power management of the base station 900, a wired or wireless network interface 980 configured to connect the base station 900 to a network, and an input output (I/O) interface 958. The base station 900 may operate based on an operating system stored in the memory 932, such as Windows Server^{™}, Mac OS X^{™}, Unix^{™}, Linux^{™}, FreeBSD^{™} or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for hybrid automatic repeat request (HARQ) feedback, performed by a terminal, comprising:
determining whether to perform an HARQ feedback operation for a reception result of a medium access control (MAC) control element (CE) according to downlink control information (DCI) for scheduling the MAC CE.

2. The method according to claim 1, wherein, determining whether to perform the HARQ feedback operation for the reception result of the MAC CE according to the DCI for scheduling the MAC CE, comprises:
determining to perform the HARQ feedback operation for the reception result of the MAC CE in response to the DCI indicating that an HARQ transmission is required;
or
determining not to perform the HARQ feedback operation for the reception result of the MAC CE in response to the DCI indicating that an HARQ transmission is not required.

3. The method according to claim 2, further comprising:
determining whether the HARQ transmission is required according to an indication of a target information field in the DCI in response to an HARQ process of the terminal being configured in an enabled state.

4. The method according to claim 3, wherein, determining whether the HARQ transmission is required according to the indication of the target information field in the DCI, comprises:
determining that the HARQ transmission is required in response to the target information field indicating a first value;
or
determining that the HARQ transmission is not required in response to the target information field indicating a second value.

5. The method according to claim 2, further comprising:
determining whether the HARQ transmission is required according to scrambling information of a cyclic redundancy check (CRC) of the DCI received in response to an HARQ process of the terminal being configured in a disabled state.

6. The method according to claim 5, wherein, determining whether the HARQ transmission is required according to the scrambling information of the CRC of the DCI received, comprises:
determining that the HARQ transmission is required in response to the scrambling information indicating that the CRC of the DCI is scrambled based on an MAC CE radio network temporary identity (RNTI);
or
determining that the HARQ transmission is not required in response to the scrambling information indicating that the CRC of the DCI is not scrambled based on an MAC CE RNTI.

7. The method according to claim 5, wherein, determining whether the HARQ transmission is required according to the scrambling information of the CRC of the DCI received, comprises:
determining that the HARQ transmission is required in response to the scrambling information indicating that the CRC of the DCI is scrambled based on a first predetermined scrambling sequence;
or
determining that the HARQ transmission is not required in response to the scrambling information indicating that the CRC of the DCI is scrambled based on a second predetermined scrambling sequence.

8. The method according to claim 2, further comprising:
performing HARQ feedback on a time-frequency resource position indicated by the DCI according to the reception result of the MAC CE in response to determining to perform the HARQ feedback operation for the reception result of the MAC CE.

9. A method for hybrid automatic repeat request (HARQ) feedback, performed by a base station, comprising:
sending downlink control information (DCI) to a terminal;
wherein, the DCI is at least configured: for the terminal to determine whether to perform an HARQ feedback operation for a reception result of a medium access control (MAC) control element (CE).

10. The method according to claim 9, further comprising:
determining indication information of a target information field in the DCI according to whether to require to indicate the terminal to perform the HARQ transmission in response to an HARQ process of the terminal being configured in an enabled state.

11. The method according to claim 10, wherein, determining the indication information of the target information field in the DCI according to whether to require to indicate the terminal to perform the HARQ transmission, comprises:
determining that the indication information of the target information field is a first value in response to requiring to indicate the terminal to perform the HARQ transmission;
or
determining that the indication information of the target information field is a second value in response to not requiring to indicate the terminal to perform the HARQ transmission.

12. The method according to claim 9, further comprising:
determining scrambling information of a cyclic redundancy check (CRC) of the DCI sent to the terminal according to whether to require to indicate the terminal to perform the HARQ transmission in response to an HARQ process of the terminal being configured in a disabled state.

13. The method according to claim 12, wherein, determining the scrambling information of the CRC of the DCI sent to the terminal according to whether to require to indicate the terminal to perform the HARQ transmission, comprises:
determining that the scrambling information for scrambling the CRC of the DCI is an MAC CE radio network temporary identity (RNTI) in response to requiring to indicate the terminal to perform the HARQ transmission;
or
determining that the scrambling information for scrambling the CRC of the DCI is a first predetermined scrambling sequence in response to requiring to indicate the terminal to perform the HARQ transmission;
or
determining that the scrambling information for scrambling the CRC of the DCI is a second predetermined scrambling sequence in response to not requiring to indicate the terminal to perform the HARQ transmission.

14. An apparatus for hybrid automatic repeat request (HARQ) feedback, applied to a terminal, comprising a determining module, wherein,
the determining module is configured to: determine whether to perform an HARQ feedback operation for a reception result of a medium access control (MAC) control element (CE) according to downlink control information (DCI) for scheduling the MAC CE.

15. An apparatus for hybrid automatic repeat request (HARQ) feedback, applied to a base station, comprising a sending module, wherein,
the sending module is configured to send downlink control information (DCI) to a terminal;
wherein, the DCI is at least configured: for the terminal to determine whether to perform an HARQ feedback operation for a reception result of a medium access control (MAC) control element (CE).

16. A communication device, comprising:
an antenna;
a memory; and
a processor, respectively connected to the antenna and the memory, and configured to control transmission and reception of the antenna and perform the method according to any one of claims 1 to 8 or the method according to any one of claims 9 to 13 by executing computer-executable instructions stored in the memory.

17. A computer storage medium having stored computer-executable instructions thereon, wherein when the computer-executable instructions are executed by a processor, the method according to any one of claims 1 to 8 or the method according to any one of claims 9 to 13 is performed.
